(19) Europäisches Patentamt
European Patent Office
Office européen des brevets

(11) Publication number: **0 417 896 B1**

(12) # EUROPEAN PATENT SPECIFICATION

(45) Date of publication of patent specification: **09.11.94**

(51) Int. Cl.[5]: **A01N 25/30**, A01N 25/04

(21) Application number: **90308187.5**

(22) Date of filing: **26.07.90**

(54) **Water-based pesticidal composition.**

(30) Priority: **26.07.89 JP 193577/89**

(43) Date of publication of application:
**20.03.91 Bulletin 91/12**

(45) Publication of the grant of the patent:
**09.11.94 Bulletin 94/45**

(84) Designated Contracting States:
**DE FR GB IT NL**

(56) References cited:

**CHEMICAL ABSTRACTS, vol. 103, no. 12, 23rd September 1985, page 86, abstractno. 89334c, Columbus, Ohio, US; & JP-A-60 75 324 (NEOS) 27-04-1985**

**CHEMICAL ABSTRACTS, vol. 103, no. 14, 7th October 1985, page 156, abstract no.107498r, Columbus, Ohio, US; & JP-A-60 42 492 (KAO) 06-03-1985**

**CHEMICAL ABSTRACTS, vol. 103, no. 18, 4th November 1985, page 158, abstract no.**

**144635d, Columbus, Ohio, US; & JP-A-60 55 089 (KAO) 29-03-1985**

(73) Proprietor: **Takemoto Yushi Kabushiki Kaisha
2-5, Minato-machi
Gamagouri-shi Aichi-ken (JP)**

(72) Inventor: **Itoh, Shinich
55-2 Aza-teramae,
Imure-cho
Toyohashi-shi, Aichi-ken (JP)**
Inventor: **Kuno, Kenzi
128 Higashiyashiki,
Gyoyou-cho
Nishio-shi, Aichi-ken (JP)**
Inventor: **Hoshino, Akio
1-135 Fubuki-cho
Okazaki-shi, Aichi-ken (JP)**

(74) Representative: **Ablewhite, Alan James et al
MARKS & CLERK,
57/60 Lincoln's Inn Fields
London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 417 896 B1

## Description

This invention relates to a pesticidal composition having a pesticide emulsified in a water-based medium.

Pesticides such as insecticides, fungicides and herbicides are generally prepared into an appropriate formulation such as an emulsifiable concentrate, wettable powder, dust or granules, depending upon their individual characteristics and purpose of use, before they are put to a practical use. Recently, water based concentrated emulsions (hereinafter abbreviated into EW) having a pesticide in the form of an emulsion are considered to be more favourable from the point of view of human safety and environmental protection from these pesticidal formulations. It is essential that these EWs are stable such that there is no sedimentation, flocculation or gelation of their emulsified particles.

Examples of dispersant conventionally used for the preparation of EWs include non-ionic surfactants such as polyoxyethylated alkylphenol, polyoxyethylated polyarylphenol, sorbitan fatty acid esters and polyoxyethylated sorbitan fatty acid esters, and anionic surfactants such as many kinds of sulfonates, sulfates and phosphates. Examples of known stabilisers for dispersion of an emulsion (protective colloid) to be used with the dispersant include synthetic organic high molecular compounds such as carboxymethyl cellulose, polyethylene oxides and polyvinyl alcohols and natural sugar derivatives such as xanthan gum, guar gum and sodium alginate. U.S. Patent No. 4,303,640, Japanese Patent Publications Tokko 63-32046, Tokkai 58-131902 and Tokkai 63-198605 and British Patent 2,048,675, for example, disclose examples of EW as water-based pesticidal formulations using these known dispersants and stabilizers.

With these prior art EW using known dispersants and stabilizers, however, there remain the problems of sedimentation, flocculation and gelation of the emulsified particles, thereby adversely affecting not only the stability of the water-based pesticidal formulations but also their handling and biological activities. In particular, the stability of a water-based pesticidal formulation decreases as its pesticide concentration increases. The viscosity of the system increases significantly in such a case and this introduces additional limitations in the selection of apparatus for its preparation as well as its load.

We have now found that the above problems may be overcome by using a dispersant for the emulsion containing polyalkylene glycol ether derivatives of polyethylene polyamines, and an unsaturated aliphatic partial ester of polyhydric alcohol or an ethylene oxide adduct thereof.

According to the present invention there is provided a pesticidal composition comprising a pesticide emulsified in a water-based medium, comprising 100 weight parts of substantially water-insoluble pesticide which is paste or liquid at room temperature and 1. 7-200 weight parts of a surface-active agent containing Component A and Component B at a weight ratio of A/B = 80/20-20/80 where Component A is a polyalkylene glycol ether derivative of a polyethylene polyamine shown by the following general formula and having a molecular weight of 20,000 - 100,000:

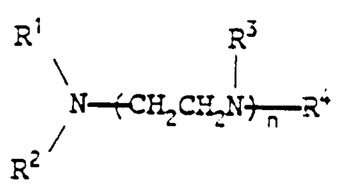

where $R^1$, $R^2$, $R^3$ and $R^4$ are selected from the group consisting of hydrogen, alkyl group with 1-4 carbon atoms, alkanoyl group with 2-18 carbon atoms, alkenoyl group with 2-18 carbon atoms and polyoxyalkylene glycol group containing oxyethylene unit and oxypropylene unit at a weight ratio of [oxyethylene unit/oxypropylene unit] = 100/0 - 50/50, at least one of $R^1$, $R^2$, $R^3$ and $R^4$ being such polyoxyalkylene glycol group, and n is an integer from 2-250, and Component B includes one or more selected from the group consisting of partial esters of polyhydric alcohol selected from sorbitol, sorbitan, glycerine and polyglycerine and unsaturated aliphatic acid with 16-22 carbon atoms and ethylene oxide adducts of such partial esters.

The pesticides according to the present invention are those with extremely small water solubility or no water solubility at all, which are paste or liquid at room temperature, that is, they are substantially insoluble to water. Examples of such pesticide include 0,0-dimethyl-0-4-methylthio-m-tolyl phosphorothioate (Baycid), S-4-chlorobenzyl diethylthio carbamate (Saturn), S-$\alpha$-ethoxycarbonyl benzyl-0,0-dimethyl phosphorodithioate (Elsan) and 0-sec-butylphenyl methylcarbamate (BPMC).

Component A which is used as an emulsion dispersant according to the present invention is a polyalkylene glycol ether derivative of polyethylene polyamine having a specified structure as shown above.

Such a derivative can be obtained by using as starting material polyethylene polyamine having three or more amino groups in its molecule or its partially alkylated or acylated derivative and by a reaction between the active hydrogen groups connected to these amino groups and alkylene oxide having ethylene oxide as its indispensable component. Examples of polyethylene polyamine to be thus used include diethylene triamine, triethylene tetramine, tetraethylene pentamine, pentaethylene hexamine and ring-opening polymers of ethylene imine known as polyethylene imines with average molecular weights of 300-10000. Examples of partially alkylated or acylated polyethylene polyamine obtained by partially alkylating or acylating the amino groups of such polyethylene polyamine include N- methyl polyethylene polyamine, N-butyl polyethylene polyamine, N-octyl polyethylene polyamine, N-octadecenyl polyethylene polyamine, N-acetyl polyethylene polyamine, N-butanoyl polyethylene polyamine, N-octanoyl polyethylene polyamine, N-oleoyl polyethylene polyamine and N-octadecanoyl polyethylene polyamine. The alkylene oxide to be used for obtaining polyalkylene glycol derivatives from such polyalkylene polyamines or their partially alkylated or acylated derivatives must necessarily include ethylene oxide but may also include, for example, propylene oxide. Practical examples of such polyalkylene glycol derivative include polyethylene glycol ether derivatives with ethylene oxide added singly as well as polyalkylene glycol ether derivatives with mixed block or random additions of both ethylene oxide and propylene oxide. If a mixture of both ethylene oxide and propylene oxide is added, the mixing ratio of ethylene oxide should be 50 weight % or greater. If this ratio is less than 50 weight %, the resultant polyalkylene glycol derivative has reduced water solubility.

The molecular weight of the polyethylene polyamine to be used as the material for Component A of the present invention should preferably be 300 or greater according to the purpose for which it is used. This corresponds to n being 7 or greater in the chemical formula. Similarly, the molecular weight of Component A should preferably be 20,000-100,000 and more preferably 50,000-90,000.

The water-based pesticidal compositions of the present invention are characterized wherein Component A and Component B are both used as a surface active agent. Component B is a partial ester of polyhydric alcohol and unsaturated aliphatic acid obtained by an esterification reaction of polyhydric alcohol and unsaturated aliphatic acid or by inter-molecular or intra-molecular dehydrating condensation of this polyhydric alcohol which accompanies the reaction, or ethylene oxide adduct of such partial ester. Examples of this polyhydric alcohol include sorbitol, sorbitan, glycerine and polyglycerine. Examples of this unsaturated aliphatic acid include monoethylenic acid, dienoic and trienoic with 16-22 carbon atoms either as a simple substance or a mixture. Particularly preferable, however, are those rich in glycerides of such as palmitoleic acid, oleic acid, linoleic acid and ricinoleic acid and obtainable from animal or vegetable oil. Examples of Component B obtainable from such polyhydric alcohol and such unsaturated aliphatic acid include sorbitan monooleate, sorbitan trioleate, glycerine monooleate, glycerine sesqui mono-di ester of soybean fatty acid and aliphatic acid, glycerine monoeruciate, diglycerine dioleate and triglycerine trioleate. Ethylene oxide adducts of such a partial ester can be obtained by adding ethylene oxide to free hydroxyl groups in the partial ester. It is preferable that 20 moles or less of ethylene oxide be added to one mole of the partial ester.

According to the present invention, the ratio between Component A and Component B (A/B) should be 80/20 -20/80 by weight. Depending on the purpose of use, however, a ratio in the range of 65/35 - 35/65 is particularly preferable.

To summarize, water-based pesticidal compositions of the present invention are characterized as containing a pesticide and a surface active agent having Component A and Component B as its indispensable constituents. Although the pesticide content in the composition is not limited, it is preferably in the range of 10 - 60 weight %. If the weight percentage exceeds this range, sedimentation, flocculation and gelation of the emulsified particles tend to occur easily, adversely affecting the stability. If the weight percentage does not reach this range, there arises no technical difficulty in particular but it may become necessary to use an increased amount of the composition for obtaining the same result. The amount of surface active agent to be used is about 1. 7 - 200 weight parts for 100 weight parts of the pesticide but a ratio of 3 - 100 weight parts to 100 weight parts of the pesticide is particularly desirable, depending on the purpose of use.

The water-based pesticidal compositions of the present invention can be produced by known methods. For example, the pesticide being in the form of a paste or a liquid under the temperature condition of its production, an EW may be obtained by means of an emulsifying apparatus such as a homomixer or a homogenizer.

The description given above of the present invention is not intended to limit the scope of the invention. The water-based pesticidal compositions of the present invention may include additional components besides the surface active agent described above, depending on the purpose of use and within the limitation that the principal objects of the present invention are not adversely affected. Such additional

component includes thickeners, anti-freezing agents, anti-forming agents, antiseptics and pH buffers.

In what follows, the invention is explained by way of practical examples.

Test 1

A test example of Component A (to be identified as A-1), which is one of the constituents of the surface active agent for the present invention, was prepared as described below. Other test examples of Component A (A-2 through A-5) shown in Table 1, as well as comparison examples shown in Table 2 were also synthesized.

(Synthesis of A-1)

After 360g of polyethylene imine (average molecular weight = 1200) was placed inside an autoclave and the interior of the reaction system was replaced by nitrogen gas, 600g of propylene oxide was introduced with pressure into the autoclave over a period of 3 hours at 80°C in the absence of any catalyst. After a reaction was continued for 30 minutes at 80 - 100°C, 83g of potassium hydoxide was added and a mixture of 1850g of propylene oxide and 22100g of ethylene oxide was introduced with pressure into the autoclave over a period of about 24 hours at 120 - 150°C. After a reaction was continued for 2 hours at the same temperature, 24900g of a dispersant (A-1) was obtained. The hydroxyl value of A-1 was 20.5 and its average molecular weight calculated from this hydroxyl value was 83400. In Tables 1 and 2, AO indicates alkylene oxide, EO indicates ethylene oxide and PEPA indicates polyethylene imine.

## TABLE 1

| Component A | Starting Material: Kind | Starting Material: Average Molecular Weight | Average Molecular Weight | AO Addition | EO Weight % |
|---|---|---|---|---|---|
| A-1 | PEPA | 1200 | 83400 | Block/Random | 90 |
| A-2 | PEPA | 600 | 72100 | Block | 80 |
| A-3 | PEPA | 300 | 81300 | Block | 90 |
| A-4 | PEPA | 600 | 24400 | Block | 90 |
| A-5 | PEPA | 1200 | 52500 | -- | 100 |

TABLE 2

| Surface active agent | Starting Material | | Average Molecular Weight | AO Addition | EO Weight % |
|---|---|---|---|---|---|
| | Kind | Average Molecular Weight | | | |
| R-1 | Ethylene diamine | -- | 15000 | Block | 90 |
| R-2 | Ethylene diamine | -- | 8300 | Block | 90 |
| R-3 | PEPA | 600 | 12200 | Block | 40 |
| R-4 | PEPA | 1200 | 81300 | Block | 30 |

Test 2

50 weight parts of Elsan (liquid) as pesticide, 5 weight parts of propylene glycol as anti-freezing agent, 9 weight parts of surface active agent (except 10 weight parts for Comparison Example 10 and 8 weight parts for Comparison Example 11) and 36 weight parts of water (except 35 weight parts for Comparison

Example 10 and 37 weight parts for Comparison Example 11) were mixed together to prepare Elsan EW by using a homomixer to mix and stir for 5 minutes at 7000rpm.

For each Elsan EW agent thus obtained, its appearance was evaluated and its emulsion stability and particle size (µm) were measured as explained below. The results are shown in Table 3 (for test examples) and Table 4 (for comparison examples). (Evaluation of appearance immediately afterward) The appearance of each Elsan EW , was observed immediately after it was prepared and was evaluated as follows:

A: Good emulsified condition;
B: Fairly good emulsified condition;
C: Unsatisfactory emulsified condition.

(Evaluation of appearance after storage)

Immediately after each Elsan EW agent was prepared, 50g thereof was placed inside a glass container of diameter 38mm and capacity 100ml, the container was sealed and stored for 60 days during which temperature was kept at -5°C for three days and then 50°C for three days, this cycle being repeated 10 times. Thereafter, each sample was evaluated as follows:

A: Good emulsified condition as immediately after the preparation;
B: Sedimentation of particles is slightly noticeable but easily re-emulsified by shaking or mixing;
C: Particle sedimentation and separation are noticeable and difference is significant from the condition immediately after the preparation;
D: Significant particle sedimentation and separation.

(Measurement of stability)

The ratio of the height of the emulsified part to the total liquid height was measured for both the samples obversed immediately after the preparation and those stored for 60 days as described above.

(Measurement of particle size)

Use was made of both the Elsan EW observed immediately after the preparation and those stored for 60 days as described above and the diameter (µm) of emulsified particles was measured in each by using CAPA700 produced by Horiba. The results are shown in Tables 3 and 4, where

B-1: Sorbitan monooleate;
B-2: Sorbitan trioleate;
B-3: Glycerine monooleate;
B-4: Glycerine trioleate;
B-5: Polyoxyethylene (20 moles) sorbitan monooleate;
B-6: Polyoxyethylene (20 moles) sorbitan trioleate.
-: No measurement taken because it was inappropriate as water-based pesticide for lack of flowability or presence of oil separation, or because it was solidified and did not re-emulsify;
R-5: Polyoxyethylene polyoxypropylene block polyether (average molecular weight = 20000, ethylene oxide = 70 weight %);

R-6: Phosphate ester sodium salt of R-5;

**TABLE 4**

**(Comparison Examples)**

| No. | Surface active agent | | Appearance | | Stability | Particle Diameter (μ) | |
|---|---|---|---|---|---|---|---|
| | Component | Part | Immediately After | After Storage | % | Immediately After | After Storage |
| 9 | R-1<br>B-1 | 4<br>5 | B | D | 50 | 3.0 | 8.0 |
| 10 | R-2<br>B-5 | 5<br>5 | A | D | -- | -- | -- |
| 11 | R-3<br>B-3 | 3<br>5 | B | D | 61 | 4.0 | 9.0 |
| 12 | R-4<br>B-4 | 4<br>5 | B | D | 50 | 1.5 | 5.0 |
| 13 | R-5<br>B-1 | 4<br>5 | B | D | 63 | 1.5 | 7.0 |
| 14 | R-6<br>B-1 | 4<br>5 | B | D | -- | -- | -- |

**TABLE 3**

(Test Examples)

| No. | Surface active agent: Component | Surface active agent: Part | Appearance: Immediately After | Appearance: After Storage | Stability % | Particle Diameter (μ): Immediately After | Particle Diameter (μ): After Storage |
|---|---|---|---|---|---|---|---|
| 3 | A-1<br>B-1 | 4<br>5 | A | A | 98 | 1.2 | 1.3 |
| 4 | A-5<br>B-2 | 4<br>5 | A | A | 93 | 1.5 | 1.8 |
| 5 | A-2<br>B-3 | 4<br>5 | A | A | 97 | 1.4 | 1.6 |
| 6 | A-3<br>B-4 | 4<br>5 | A | A | 92 | 1.4 | 1.6 |
| 7 | A-4<br>B-5 | 4<br>5 | A | A | 92 | 1.2 | 1.6 |
| 8 | A-4<br>B-6 | 4<br>5 | A | B | 85 | 1.2 | 1.7 |

Test 3

Each of the EW shown in Tables 5 and 6 was prepared similarly as in Test 2. These EW are characterized as each containing 5 weight parts of propylene glycol as anti-freezing agent and water to

make a total of 100 weight parts. Each EW was tested as in Test 2, the results being shown in Tables 5 and 6, where

R-7: Polyoxyethylene (30 moles) tristyryl phenylether.

These tables show clearly that the water-based pesticidal compositions embodying the present invention are extremely stable.

**TABLE 5**

(Test Examples)

| No. | Pesticide Type | Pesticide Part | Surface active agent Comp't | Surface active agent Part | Appearance Immed'ly After | Appearance After Storage | Stability % | Particle Size (μ) Immed'ly After | Particle Size (μ) After Storage |
|---|---|---|---|---|---|---|---|---|---|
| 9 | Saturn | 55 | A-1<br>B-1 | 4<br>3 | A | A | 98 | 0.9 | 1.1 |
| 10 | Saturn | 55 | A-1<br>B-5 | 4<br>5 | A | A | 96 | 1.0 | 1.5 |
| 11 | BPMC | 25 | A-2<br>B-5 | 4<br>5 | A | A | 98 | 0.8 | 1.2 |

TABLE 6

(Comparison Examples)

| No. | Pesticide Type | Pesticide Part | Surface active agent Comp't | Surface active agent Part | Appearance Immed'ly After | Appearance After Storage | Stability % | Particle Size (μ) Immed'ly After | Particle Size (μ) After Storage |
|---|---|---|---|---|---|---|---|---|---|
| 15 | Saturn | 55 | A-1<br>B-1 | 0.3<br>0.3 | C | D | -- | -- | -- |
| 16 | Saturn | 55 | R-1<br>B-1 | 4<br>3 | A | D | -- | -- | -- |
| 17 | Saturn | 55 | R-3<br>B-1 | 4<br>3 | B | D | -- | -- | -- |
| 18 | Saturn | 55 | R-4<br>B-1 | 4<br>3 | C | D | -- | -- | -- |
| 19 | BPMC | 25 | R-8 | 5 | A | D | -- | -- | -- |

## Claims

1. A water-based pesticidal composition having a pesticide emulsified in a water-based medium, said composition comprising: 100 weight parts of a substantially water insoluble pesticide which is paste or

liquid at room temperature, and 1.7-200 weight parts of a surface-active agent containing Component A and Component B at weight ratio of A/B = 80/20 - 20/80;

wherein Component A is a polyalkylene glycol ether derivative of polyethylene polyamine shown by the following general formula and having molecular weight of 20,000 - 100,000:

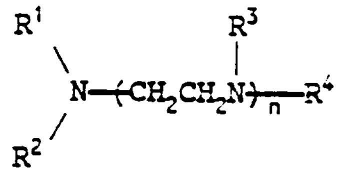

where $R^1$, $R^2$, $R^3$ and $R^4$ are selected from the group consisting of hydrogen, alkyl group with 1-4 carbon atoms, alkanoyl group with 2-18 carbon atoms, alkenoyl group with 2-18 carbon atoms and polyoxyalkylene glycol group containing oxyethylene and oxypropylene groups at a weight ratio of (oxyethylene/oxypropylene) = 100/0 - 50/50, at least one of $R^1$, $R^2$, $R^3$ and $R^4$ being said polyoxyalkylene glycol group, and n is an integer from 2-250;

and wherein Component B includes one or more selected from the group consisting of partial esters of a polyhydric alcohol selected from sorbitol, sorbitan, glycerine and polyglycerine and unsaturated aliphatic acid with 16-22 carbon atoms and ethylene oxide adducts of said partial esters.

**2.** A composition according to Claim 1 containing 10-60 weight % of said pesticide.

**3.** A composition according to Claim 1 or Claim 2 wherein said Components A and B are contained at a weight ratio of A/B = 65/35 - 35/65.

**4.** A composition according to any of Claims 1 to 3 containing said pesticide and said surface active agent at a relative weight ratio of 100/3-100/100.

**5.** A composition according to any of Claims 1 to 4 which is in the form of a concentrated emulsion.

**Patentansprüche**

**1.** Pestizid-Zusammensetzung auf wäßriger Basis mit einem in einem Medium auf wäßriger Basis emulgierten Pestizid, wobei die Zusammensetzung umfaßt: 100 Gewichtsteile eines im wesentlichen in Wasser unlöslichen Pestizids, das bei Raumtemperatur pastös oder flüssig ist, sowie 1,7 bis 200 Gewichtsteile eines oberflächenaktiven Mittels, das eine Komponente A und eine Komponente B im Gewichtsverhältnis von A/B = 80/20 bis 20/80 enthält;

worin die Komponente A ein Polyalkylenglykolether-Derivat von Polyethylenpolyamin der folgenden allgemeinen Formel mit einem Molekulargewicht von 20.000 bis 100.000 ist:

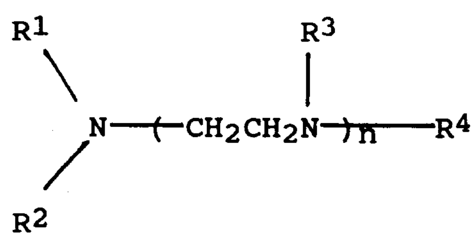

worin $R^1$, $R^2$, $R^3$ und $R^4$ ausgewählt sind aus der aus Wasserstoff, Alkylgruppe mit 1 bis 4 Kohlenstoffatomen, Alkanoylgruppe mit 2 bis 18 Kohlenstoffatomen, Alkenoylgruppe mit 2 bis 18 Kohlenstoffatomen und Polyoxyalkylenglykolgruppe, die Oxyethylen- und Oxypropylen-Gruppen in einem Gewichtsverhältnis von (Oxyethylen/Oxypropylen) = 100/0 bis 50/50 enthält, bestehenden Gruppe, wobei mindestens einer der Reste $R^1$, $R^2$, $R^3$ und $R^4$ die Polyoxyalkylenglykolgruppe ist, und worin n eine ganze Zahl von 2 bis 250 ist;

und worin die Komponente B einen oder mehrere ausgewählte Vertreter aus der Gruppe einschließt, die aus Partialestern eines Polyhydroxyalkohols, ausgewählt aus Sorbit, Sorbitan, Glycerin und Polyglycerin, und ungesättiger aliphatischer Säure mit 16 bis 22 Kohlenstoffatomen sowie Ethylenoxid-Addukten dieser Partialester besteht.

2. Zusammensetzung nach Anspruch 1, enthaltend 10 bis 60 Gew.-% des Pestizids.

3. Zusammensetzung nach Anspruch 1 oder Anspruch 2, worin die Komponenten A und B in einem Gewichtsverhältnis von A/B = 65/35 bis 35/65 enthalten sind.

4. Zusammensetzung nach einem der Ansprüche 1 bis 3, enthaltend das Pestizid und das oberflächenaktive Mittel in einem relativen Gewichtsverhältnis von 100/3 bis 100/100.

5. Zusammensetzung nach einem der Ansprüche 1 bis 4 in Form einer konzentrierten Emulsion.

**Revendications**

1. Composition pesticide aqueuse ayant un pesticide émulsionné dans un milieu aqueux, ladite composition comprenant: 100 parties en poids d'un pesticide substantiellement insoluble dans l'eau qui est un pâte ou un liquide à la température ordinaire et de 1.7 à 200 parties en poids d'un agent tensio-actif contenant un composant A et un composant B dans un rapport de A/B = 80/20 - 20/80;

dans laquelle le composant A est un dérivé éther polyalkylène glycolique de polyéthylène polyamine représenté par la formule générale suivante et ayant un poids moléculaire de 20.000 à 100.000

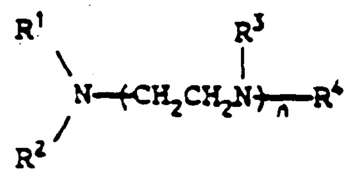

dans laquelle $R^1$, $R^2$, $R^3$ et $R^4$ sont choisis dans le groupe constitué par l'hydrogène, les groupes alkyles ayant de 1 à 4 atomes de carbone, les groupes alcanoyles ayant de 2 à 18 atomes de carbone, les groupes alcénoyles ayant de 2 à 18 atomes de carbone et les groupes polyoxyalkylène glycols contenant des groupes oxyéthylène et oxypropylène dans un rapport pondéral (oxyéthylène/oxypropylène) de 100/0 - 50/50, au moins un des $R^1$, $R^2$, $R^3$ et $R^4$ étant ledit groupe polyoxyalkylène glycol et n est un nombre entier compris entre 2 et 250 inclusivement;

et dans laquelle le composant B comprend un ou plusieurs composés choisis dans le groupe constitué par les esters partiels d'un polyol choisi parmi le sorbitol, le sorbitan, la glycérine et la polyglycérine et d'un acide aliphatique non saturé ayant de 16 à 22 atomes de carbone et les produits d'addition d'oxyde d'éthylène desdits esters partiels.

2. Composition selon la revendication 1, contenant de 10 à 60% en poids dudit pesticide.

3. Composition selon la revendication 1 ou la revendication 2, dans laquelle lesdits composants A et B sont contenus dans un rapport en poids de A/B égal à 65/35 - 35/65.

4. Composition selon l'une quelconque des revendications 1 à 3, contenant ledit pesticide et ledit agent tensio-actif dans un rapport pondéral relatif de 100/3 - 100/100.

5. Composition selon l'une quelconque des revendications 1 à 4 qui est sous la forme d'une émulsion concentrée.